# EUROPÄISCHE PATENTSCHRIFT

(11) **EP 0 713 749 B1**
(45) Veröffentlichungstag und Bekanntmachung des Hinweises auf die Patenterteilung: **22.09.1999**
(21) Anmeldenummer: 95118024.9
(22) Anmeldetag: 16.11.1995
(51) Int. Cl.: B23Q 1/25

(54) **Werkzeugmaschine**
Machine tool
Machine-outil

(30) Priorität: 25.11.1994 DE 9418723 U
(43) Veröffentlichungstag der Anmeldung: 29.05.1996
(73) Patentinhaber: Deitert, Heinz, D-33442 Herzebrock-Clarholz (DE)
(72) Erfinder: Deitert, Heinz, D-33442 Herzebrock-Clarholz (DE)
(74) Vertreter: Strauss, Hans-Jochen, Dipl.-Phys., Dr.

(56) Entgegenhaltungen:
- EP-A- 0 486 992
- DE-A- 3 330 942
- DE-B- 1 067 661
- DE-U- 6 950 024
- FR-A- 2 297 114
- FR-A- 2 500 777
- FR-A- 2 528 745
- FR-A- 2 694 720
- US-A- 2 340 210
- US-A- 2 499 842
- US-A- 2 835 172

## Beschreibung

Die Erfindung bezieht sich auf eine Werkzeugmaschine mit einem Maschinentisch, auf den ein Werkstück aufspannbar ist, einem dem Werktisch gegenüberliegend angeordneten Spindelkasten mit mindestens einer auf das Werkstück gerichteten Spindel mit Antrieb, die ein spanabhebendes Werkzeug aufnimmt.

Zur zerspanenden Bearbeitung von Werkstücken werden diese in aller Regel auf einem Maschinentisch aufgespannt und mit einem rotierenden Werkzeug, das von einer Spindel gehalten und angetrieben ist, unter Materialabtragung in die gewünschte Form gebracht. Diese Spindel ist in einem dem Maschinentisch gegenüber liegend angeordneten Spindelkasten gelagert, der auch den Spindelantrieb sowie ggf. vorhandene Kühlmittelzuführungen aufnimmt. Der Spindelkasten oder die Spindel selbst können auf den Maschinentisch zu und vom Maschinentisch weg bewegt werden, um die Bearbeitungstiefe einstellen zu können. Zur Bearbeitung werden Schruppwerkzeuge eingesetzt, um die grobe Form zu erreichen, während anschließend mit Schlichtwerkzeugen die Feinbearbeitung erfolgt. In aller Regel erfordert die Feinbearbeitung höhertourige Werkzeuge als beim Vorarbeiten. Wesentlich ist dabei, daß das Werkzeug alle Teile des Werkstücks erreichen kann, was mit der bekannten Konstruktion nicht ohne weiters möglich ist. So ist der überstreichbare Fahrbereich durch die Verfahrbarkeit des Maschinentisches vorgegeben, was in nicht allen Fällen befriedigen kann.

Aus der FR-A-2 528 745 ist eine Werkzeugmaschine bei der die Spindel in einer kreuztischähnlichen Halterung außermittig drehbar gelagert ist, bekannt, bei der die dem Werkstück zugewandte Seite des Spindelkastens gebildet ist von einem um eine auf den Maschinentisch gerichtete Achse verdrehbaren Drehtisch mit außerhalb der Drehachse "Z" des Drehtisches angeordneter Spindel. Die US-A-2 835 172 beschreibt ein Werkzeugmaschine mit in drei Koordinaten bewegbaren Maschinentisch, auf den das Werkstück aufspannbar ist. Dem Werkstück zugewandt, ist eine Spindel vorgesehen, die auf einem Spindelträger angeordnet, längs des Spindelträgers verschiebbar ist, wobei der Spindelträger selbst um ein Vertikalachse verdrehbar ist. Schließlich beschreibt die FR-A-2 694 720 eine Werkzeugmaschine zum Schleifen und Polieren mit einem Maschinentisch, auf den das zu bearbeitende Werkstück aufspannbar ist, einem dem Werktisch gegenüberliegend angeordneten Spindelkasten mit mindestens einer auf das Werkstück gerichteten Spindel mit Antrieb, die ein spanabhebendes Werkzeug aufnimmt. Dabei ist der Spindelkasten längs eines Werkzeugträgers bewegbar, der seinerseite rechtwinklig zur Werkzeugträger verfahrbar ist. Die Spindeln sind dabei in veränderbaren Winkeln auf Werkstück gerichtet und sie sind in ihrer Höhe gegenüber dem Werkstück verstellbar. So kann zwar in Art eines Kreuztisches jede Stelle im Bearbeitungsbereich angefahren und bearbeitet werden, jedoch erscheint die Einsatzmöglichkeit beschränkt.

Daraus folgt die der Erfindung zugrunde liegende Aufgabenstellung, nach der eine gattungsgemäße Werkzeugmaschine derart weiter gebildet werden soll, daß der überstreichbare Fahrbereich und damit deren Einsatzmöglichkeit ohne Änderung des Maschinentisches erweitert werden soll, und daß mit einer Werkzeugmaschine ein Schruppen und Schlichten ermöglicht wird, wobei die Werkzeugmaschine einfach und wirtschaftlich herstellbar und sicher einsetzbar sein soll.

Diese Aufgabenstellung wird durch die Merkmale des Anspruchs 1 gelöst; vorteilhafte Weiterbildungen und bevorzugte Ausführungsformen beschreiben die Unteransprüche.

Die dem Werkstück zugewandte Seite des Spindelkasten bildet ein um eine auf das Werkstück gerichteten Achse verdrehbaren Drehtisch, der mit einer bekannten, zentrischen Spindel mit auf das Werkstück gerichteten Drehachse sowie mit einer ebenfalls an sich bekannten, ausserhalb der Drehachse des Drehtisches angeordnete exzentrische Spindel versehen ist, Die im Drehzentrum des Drehtischen vorgesehene zentrische Spindel ist vorteilhaft als nieder-tourig laufende Spindel ausgebildet, die übliche Grobbearbeitung durch Schruppen erlaubt, Die folgende Feinbearbeitung übernimmt die exzentrisch vorgesehene, vorteilhaft als hochtourig laufend ausgebildete, zum Schlichten geeignete Spindel. Die darin eingesetzten Werkzeuge sind in aller Regel solche mit schlankem Schaft, so daß ein tiefes Eintauchen auch in komplexe Formen möglich ist.

In vorteilhafter Ausbildung ist dabei die exzentrisch angeordnete Spindel radial verlagerbar angeordnet; eine weitere, ebenfalls vorteilhafte Ausbildung ist dadurch gegeben daß die Spindel gegenüber der Richtung der Drehachse des Drehtisches verschwenkbar ist, Dabei ist in vorteilhafter Weise die Spindel derart verschwenkbar, daß das Werkzeug in Richtung des Radius verlagert wird, Zum Verschwenken der Spindel wird bevorzugt eine Gabellagerung eingesetzt, wobei eine Drehbarkeit des Lagerbockes der Gabellagerung der Werkzeugmaschine eine weitere Achse zukommen läßt. Das von dem Futter der Spindel der Werkzeugmaschine aufgenommene Werkzeug kann so verschwenkt werden, daß die Achse von Spindel mit Werkzeug im Winkel von bis zu vorzugsweise ± 90° zur Achse "Z" stehen kann, so daß im Extremfall auch horizontale Bearbeitungen möglich sind Ein Werkzeugteil mit Antriebskasten, Drehtisch und Spindel kann dabei auch nachträglich vorgesehen werden: Er wird an die Maschinensäule angehängt. Sowohl die radiale Verlagerung als auch das Verschwenken erweitern den zur Bearbeitung verfügbaren Fahrbereich, wobei das Verschwenken auch ein Bearbeiten von Hinterschneidungen ermöglicht. Werden beide Möglichkeiten zusammen eingesetzt, ergibt sich eine Vielfalt von Anwendungsmöglichkeiten, die den bisherigen Spindel-Anordnungen verschlossen waren.

Ein genaues Positionieren gestatten vorteilhaft Präzisions-Antriebe (beispielsweise mit Hirth-Verzahnung und den auftretenden Kräften standhaltenden Bremsen) eingesetzt. Dabei werden untersetzte Motoren benutzt, die entweder ein selbsthemmendes Vorgelege-Getriebe aufweisen, oder die auf einen selbsthemmenden Verschwenk-Antrieb arbeiten. Durch diese Selbsthemmung wird sichergestellt, daß die vorgegebene Position eingehalten wird.

Vorteilhaft ist weiter, wenn wenn als Antriebe für die radiale Verlagerung und/oder das Verschwenken der exzentrischen Spindel Schritt- oder AG-Motoren vorgesehen sind, Mit diesen Antrieben können die bekannten CNC-Steuerungen eingesetzt werden, die eine punktgenaue Bearbeitung des Werkstückes ermöglichen wobei hier mit einer Werkzeugmaschine, ohne Umspannen zu müssen, sowohl die Grob- als auch die Feinbearbeitung vorgenommenn werden kann.

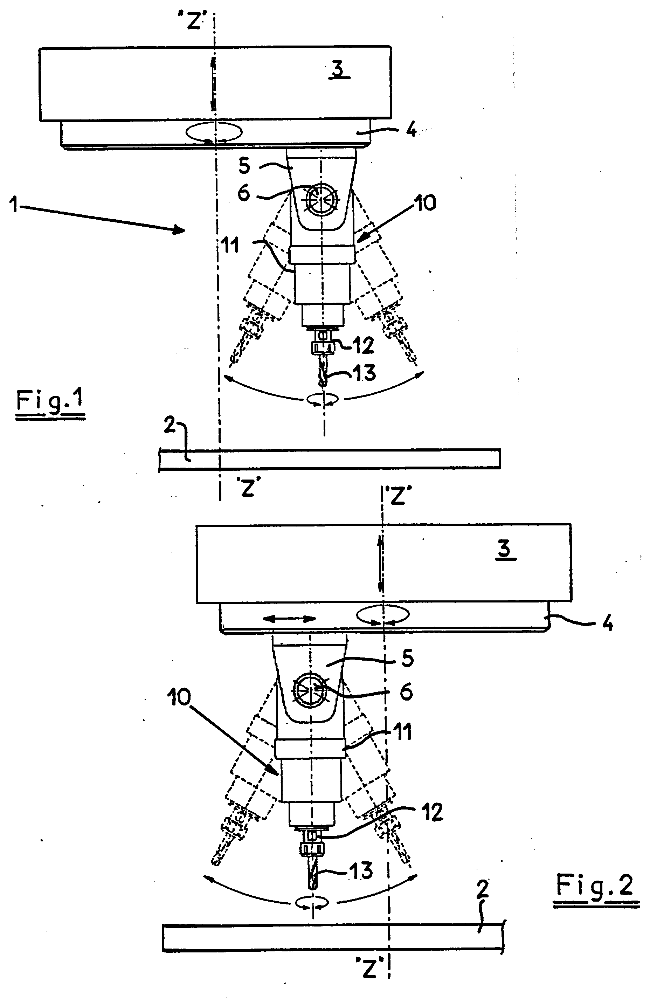

Das Wesen der Erfindung wird an Hand der in den Figuren 1 und 2 dargestellten Ausführungsbeispielen näher erläutert; dabei zeigen
- Fig. 01:: Die Werkzeugmaschine in Seitansicht, schematisch;
- Fig. 02:: Die Werkzeugmaschine in Seitansicht nach Fig. 1, Spindel um 180° verschwenkt;
- Fig. 03:: Die Werkzeugmaschine in Seitansicht mit Spindel und Zentralspindel, schematisch.
- Fig. 04:: Ansicht einer Werkzeugmaschine nach Fig. 1, Spindel um 90° verschwenkt mit angedeuteten Antrieben.

Die in den Figuren 1 und 2 dargestellte Werkzeugmaschine 1 weist einen (lediglich angedeuteten) Maschinentisch 2 auf, auf den das zu bearbeitende Werkstück (nicht näher dargestellt) mit Hilfen üblicher Pratzen aufgespannt wird. Zur spanabhebenden Bearbeitung eines Werkstückes ist eine Spindel 10 vorgesehen, die auf einem Drehtisch 4 angeordnet ist, der sich an der Unterseite eines Spindelkastens 3 befindet. In diesem Spindelkasten befindet sich der (nicht näher dargestellte) Antrieb für die Spindel 10, deren Spindelkopf 12 mit einem zerspanenden Werkzeug, hier als Fräsbohrer 13 dargestellt, ver sehen ist, das durch den Antrieb in Umdrehung versetzt wird. Ein Spindelschaft 11 hält den Spindelkopf auf einem gewünschten Abstand zur Unterseite des Drehtisches 4. Dabei ist entweder der Spindelkasten 3 insgesamt oder die Spindel 10, ggf. mit ihrem Gabellager, in Richtung auf den Maschinentisch 2 hin oder von diesem weg verfahrbar. Um die Spindel schwenken zu können, ist der Drehtisch um die zentrale Drehachse "Z" verschwenkbar. Ein Gabellager 5 hält dabei den Schaft, wobei dieser um einen Lagerbolzen 6 so verschwenkbar ist, daß die Spitze des zerspanenden Werkzeugs eine Bewegung durch führt, die in radialer Richtung bezogen auf die Drehachse des Drehtisches 4 verläuft. Dabei erscheint es selbstverständlich, daß dieses Gabellager 5 so ausgebildet ist, daß der durch die Lagergabel 5 verlaufenden Spindelantrieb -die Drehbewegung des Werkzeugs 13 wird vom Spindelkasten auf den Spindelkopf über den Spindelschaft 11 übertragen- nicht gestört ist, etwa durch Zweiteilung des Lagerbolzens 6. Wird der Drehtisch 4 um die Zentralachse "Z" geschwenkt, wandert die Spindel 10 mit, wie in Figur 2 für einen Schwenkwinkel von 180° dargestellt. Wird dabei das Gabellager 5 auf einem Radius des Drehtisches 4 verfahren -beispielsweise gemäß dem Doppelpfeil in Figur 2- kann das in den Spindelkopf 12 eingespannte Werkzeug 13 eine Vielzahl von Koordinaten erreichen, die mit einem an die Zentralspindel angesetztem Werkzeug allein nicht erreicht werden können, dabei sind einzelne Bewegungsmöglichkeiten durch eingezeichnete Doppelpfeile dargestellt.

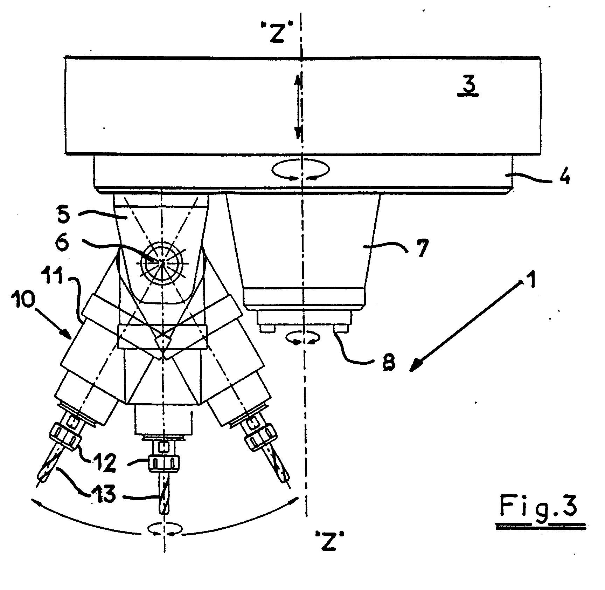

Die Figur 3 zeigt eine Werkzeugmaschine, bei der eine an sich bekannte (verkürzt dargestellte) Zentralspindel 7 vorgesehen ist, deren Spindelkopf 8 ebenfalls mit einem zerspanenden Werkzeug (nicht näher dargestellt) versehen werden kann. In dieser Ausführungsform kann die Werkzeugmaschine 1 in herkömmmlicher Weise mit dem in der Zentralspindel 7 vorgesehenen zerspanenden Werkzeug eingesetzt werden, wobei die hier gegebenen einzelnen Bewegungsmöglichkeiten - wie in Fig. 1 und 2- durch eingezeichnete Doppelpfeile angedeutet sind. Weiter ist auch ein Einsatz allein mit der exzentrisch gegenüber der Zentralachse "Z" angeordneter Spindel möglich. Schließlich ist auch ein kombinierter Einsatz mit beiden Spindeln denkbar.

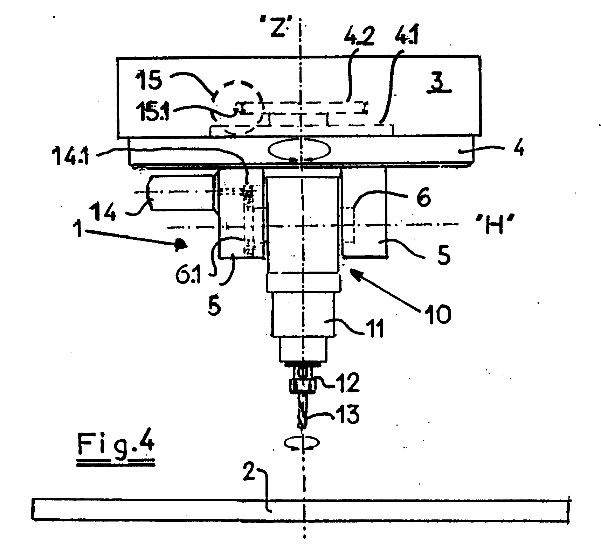

Die Figur 4 zeigt eine (schematisierte) Ansicht der Werkzeugmaschine, bei der die Spindel - gegenüber der Darstellung in Figur 1 - um 90° verschwenkt ist. Über dem Maschinentisch 1 ist die Werkzeugmaschine 1 an einer (nicht näher dargestellten) Maschinensäule angeordnet, an der der Werkzeugteil vertikal verfahrbar ist. Das im Futter 12 der Spindel 10 aufgenommene Werkzeug 13 - dargestellt als Fräsbohrer - wird von einem im Spindel-Gehäuse 11 vorgesehenen Antrieb hoch- oder niedertourig angetrieben. Um die Spindel um die Vertikalachse "Z" verschwenken zu können, ist der Drehtisch 4 mit einem im Antriebskasten 3 vorgesehenen Antrieb ausgestattet, der über einen (nicht näher bezeichneten) Ansatz mit einem Schneckenrad 3.1 versehen ist. In dieses Schneckenrad greift eine Schneckenspindel 15.1 ein, die vom Stellmotor 15 angetrieben wird. Dieser Schneckentrieb ist selbsthemmend und gestattet ein genaues Positionieren des Drehtisches 4. Zum Verschwenken der Spindel 10 um die Horizontalachse "H" ist ein an der Lagergabel 5 angeordneter Antrieb vorgesehen, der mit einem Antriebsmotor 14 versehen ist, dessen Ausgang über ein Vorgelege-Getriebe mit einem Abtriebszahnrad 14.1 und einem angetriebenen Zahnrad 6.1 mit der vom Gabellager 5 aufgenommenen Welle 6 auf die Spindel wirkt und diese bei Aktivierung des Antriebmotors 14 verschwenkt. Dabei wird der Motor so ausgebildet, daß der Abtrieb selbsthemmend ist. Es versteht sich von selbst, daß diese hier dargestellten Antriebe lediglich Beispiele für mögliche Antriebe sind; so kann beispielsweise für den Schwenkantrieb der Spindel um die Horizontalachse "H" auch ein Schneckentrieb eingesetzt werden oder es können auch Schrittmotore eingesetzt werden, die direkt auf die zu bewegenden Komponenten einwirken. Dabei können auch Bewegungen vorgesehen sein, die von Hand ausgeführt werden, wobei die bewegte Komponente nach der Bewegung festgesetzt wird, wobei es sich von selbst versteht, daß auch hier ein Linear-Antrieb - etwa mit angetriebener Gewindespindel und mit einer Gewindebuchse, die mit der in einer Horizontalführung aufgenommenen Lagergabel verbunden ist. Eine solche Bewegung ist beispielsweise die radiale Verlagerung der Spindel gegenüber der "Z"-Achse.

## Patentansprüche

1. Werkzeugmaschine mit einem Maschinentisch, auf den ein Werkstück aufspannbar ist, mit einem diesem gegenüberliegend angeordneten Spindelkasten (3) mit mindestens einer auf das Werkstück gerichteten, mit Antrieb versehenen, ein spanabhebendes Werkzeug (13) aufnehmenden Spindel (7; 10), wobei die dem Werkstück zugewandte Seite des Spindelkastens (3) als um eine auf den Maschinentisch (2) gerichtete Achse "Z" verdrehbarer Drehtisch (4) ausgebildet ist, in dessen Drehzentrum eine zentrische Spindel (7), deren Drehachse mit der auf den Maschinentisch (2) gerichteten Drehachse "Z" des Drehtisches (4) zusammenfällt, und außerhalb dessen Drehzentrums eine exzentrische Spindel (10) vorgesehen sind.

2. Werkzeugmaschine nach Anspruch 1, **dadurch gekennzeichnet**, daß die exzentrische Spindel (10) derart verschwenkbar ist, daß das von ihr gehaltene Werkzeug in Richtung des Radius verlagert wird.

3. Werkzeugmaschine nach Anspruch 1 oder 2, **dadurch gekennzeichnet**, daß die exzentrische Spindel (10) auf dem Drehtisch (4) radial verlagerbar ist.

4. Werkzeugmaschine nach Anspruch 1, **dadurch gekennzeichnet**, daß die exzentrische Spindel (10) von einem Gabellager mit Lagerbock (5) aufgenommen und mit einem Lagerbolzen (6), um diesen verschwenkbar, am Lagerbock (5) gehalten ist.

5. Werkzeugmaschine nach Anspruch 4, **dadurch gekennzeichnet**, daß der Lagerbock (5) am Drehtisch (4) drehbar befestigt ist.

6. Werkzeugmaschine nach einem der Ansprüche 1 bis 5, **dadurch gekennzeichnet**, daß der Antrieb für das Verschwenken und/oder das radiale Verlagern der exzentrischen Spindel (10) mit einem selbsthemmenden Vorgelege-Getriebe, vorzugsweise mit Hirth-Verzahnung, versehen ist.

7. Werkzeugmaschine nach einem der Ansprüche 1 bis 6, **dadurch gekennzeichnet**, daß als Antrieb für das Verschwenken und/oder das radiale Verlagern der exzentrischen Spindel (10) an sich bekannte Schritt- oder AC-Motoren vorgesehen sind, die von einer CNC-Steuerung ansteuerbar sind.

8. Werkzeugmaschine nach einem der Ansprüche 1 bis 7, **dadurch gekennzeichnet**, daß die exzentrische Spindel (10) als hochtourig laufende Spindel ausgebildet ist.

9. Werkzeugmaschine nach einem der Ansprüche 1 bis 8, **dadurch gekennzeichnet**, daß im Drehzentrum des Drehtisches (4) eine zweite, zentrische Spindel (7) vorgesehen ist, deren Drehachse mit der auf den Maschinentisch (2) gerichteten Drehachse "Z" des Drehtisches (4) zusammenfällt.

10. Werkzeugmaschine nach Anspruch 9, **dadurch gekennzeichnet**, daß die zentrische Spindel (7) als nieder-tourig laufende Spindel ausgebildet ist.

## Claims

1. Machine tool, comprising: a machine table onto which a workpiece may be clamped, a headstock (3) located opposite thereto and having at least one spindle (7; 10) which is oriented towards the workpiece, is provided with drive means and houses a cutting tool (13), wherein that side of the headstock (3), which faces the workpiece, is formed as a rotary table (4) rotatable about a "Z" axis oriented towards the machine table (2), the rotary table (2) having provided in its centre of rotation a centric spindle (7), the rotational axis of which coincides with the rotational axis "Z" of the rotary table (4), which is oriented towards the machine table (2), and outside of the centre of rotation of which is provided an eccentric spindle (10).

2. Machine tool as claimed in Claim 1, characterized in that the eccentric spindle (10) may be pivoted in such a manner that the workpiece held by it is displaced in a radial direction.

3. Machine tool as claimed in Claim 1 or 2, characterized in that the eccentric spindle (10) is radially displaceable on the rotary table (4).

4. Machine tool as claimed in Claim 1, characterized in that the eccentric spindle (10) is accomodated by a fork bearing having a bearing block (5) and is secured to the bearing block (5) by a bearing pin (6) in such a manner that it can be pivoted about the same.

5. Machine tool as claimed in Claim 4, characterized in that the bearing block (5) is rotatably fastened to the rotary table (4).

6. Machine tool as claimed in any one of Claims 1 to 5, characterized in that the drive for pivoting and/or radially displacing the eccentric spindle (10) is provided with a self-locking intermediate gear, preferably with serration.

7. Machine tool as claimed in any one of Claims 1 to 6, characterized in that as a drive for pivoting and/or radially displacing the eccentric spindle (10), stepping or ac motors per se known are provided, which may be CNC-controlled.

8. Machine tool as claimed in any one of Claims 1 to 7, characterized in that the eccentric spindle (10) is formed as a spindle running at high speeds.

9. Machine tool as claimed in any one of Claims 1 to 8, characterized in that a second, centric spindle (7) is provided in the centre of rotation of the rotary table (4), the rotational of said second spindle (7) coinciding with the rotational axis "Z" of the rotary table (4).

10. Machine tool as claimed in Claim 9, characterized in that the centric spindle (7) is formed as a spindle running at low speeds.

## Revendications

1. Machine-outil ayant une table sur laquelle une pièce peut être montée et serrée, comportant une poupée (3) faisant face à la pièce, comprenant au moins une broche (7; 10) dirigée vers la pièce, pourvue d'un entraînement et accueillant un outil coupant (13), où la face de la poupée (3), qui est orientée vers la pièce à usiner, est réalisée sous forme d'un plateau tournant (4) pouvant tourner autour d'un axe "Z" dirigé vers la table (2) de la machine, où une broche centrée (7), dont l'axe de rotation coïncide avec l'axe de rotation "Z" du plateau tournant (4) dirigé vers la table (2), est prévue au centre de rotation du plateau, et où une broche excentrée (10) est prévue à l'extérieur du centre de rotation du plateau.

2. Machine-outil selon la revendication 1, caractérisée en ce que la broche excentrée (10) est pivotante de manière telle que l'outil maintenu dans cette broche puisse être décalé dans la direction du rayon.

3. Machine-outil selon la revendication 1 ou 2, caractérisée en ce que la broche excentrée (10) peut être radialement déplacée sur le plateau tournant (4).

4. Machine-outil selon la revendication 1, caractérisée en ce que la broche excentrée (10) est reçue dans un support à chape comportant un support (5), et est maintenue dans le support (5) par un axe de palier (6), de façon à pouvoir pivoter autour de celui-ci.

5. Machine-outil selon la revendication 4, caractérisée en ce que le support (5) est fixée de façon pivotante sur le plateau tournant (4).

6. Machine-outil selon l'une des revendications 1 à 5, caractérisée en ce que l'entraînement permettant de faire pivoter et/ou de déplacer radialement la broche excentrée (10) est pourvu d'un train réducteur autobloquant, de préférence pourvu d'une denture Hirth.

7. Machine-outil selon l'une des revendications 1 à 6, caractérisée en ce que des moteurs pas-à-pas ou des moteurs à courant alternatif connus en soi sont prévus pour l'entraînement permettant de faire pivoter et/ou de déplacer radialement la broche excentrée (10).

8. Machine-outil selon l'une des revendications 1 à 7, caractérisée en ce que la broche excentrée (10) est réalisée sous forme d'une broche tournant à haut régime.

9. Machine-outil selon l'une des revendications 1 à 8, caractérisée en ce qu'une seconde broche centrée (7) est prévue dans le centre de rotation du plateau tournant (4), dont l'axe de rotation coïncide avec l'axe de rotation "Z" du plateau tournant (4), dirigé vers la table (2) de la machine.

10. Machine-outil selon la revendication 9, caractérisée en ce que la broche centrée (7) est réalisée sous forme d'une broche tournant à bas régime.
